# EUROPEAN PATENT APPLICATION

(11) **EP 4 604 473 A1**
(43) Date of publication of application: **20.08.2025**
(21) Application number: 25153556.3
(22) Date of filing: 23.01.2025
(51) Int. Cl.: H04L 27/26, H04W 84/12

(54) **ALIGNING SIGNAL FIELDS OF PPDUS IN AN AGGREGATED PPDU**

(30) Priority: 14.02.2024 KR 20240021270; 22.05.2024 KR 20240066736
(71) Applicant: Samsung Electronics Co., Ltd., Suwon-si, Gyeonggi-do 16677 (KR)
(72) Inventor: KIM, Myeongjin, Suwon-si, Gyeonggi-do 16677 (KR); KIM, Jinmin, Suwon-si, Gyeonggi-do 16677 (KR); JEON, Eunsung, Suwon-si, Gyeonggi-do 16677 (KR); CHUNG, Chulho, Suwon-si, Gyeonggi-do 16677 (KR)
(74) Representative: Kuhnen & Wacker Patent- und Rechtsanwaltsbüro PartG mbB

(57) **Abstract**

An operating method of a first apparatus configured to communicate with a second apparatus in a wireless local area network (WLAN) system includes generating (S410) a first physical layer protocol data unit (PPDU) including a first fixed signal field and a first variable signal field, generating (S420) a second PPDU including a second fixed signal field and a second variable signal field, and transmitting (S430) an aggregated-PPDU (A-PPDU) including the first PPDU and the second PPDU to the second apparatus. The generating (S420) of the second PPDU includes generating a second variable signal field including an effective symbol and a dummy symbol based on a length of the first variable signal field, and generating a second fixed signal field including a dummy field indicating information about the dummy symbol.

## Description

### BACKGROUND

The disclosure relates to wireless communication, and more particularly, to an apparatus and method of generating a signal field included in a physical layer protocol data unit (PPDU) in a wireless local area network (WLAN) system.

In wireless communication, a WLAN is an example of a technique used for connecting at least two apparatuses to each other by using a wireless signal transmission method. For example, the WLAN technique may be based on the Institute of Electrical and Electronics Engineers (IEEE) 802.11 standard. The 802.11 standard has evolved into 802.1 1b, 802.11a, 802.11g, 802.11n, 802.11ac, and 802.11ax and may support transmission speeds of up to 1 Gbyte/s based on an orthogonal frequency-division multiplexing (OFDM) technique.

In 802.11ac, data may be simultaneously transmitted to a plurality of users through a multi-user multi-input multi-output (MU-MIMO) technique. In 802.11ax, which is referred to as high efficiency (HE), not only MU-MIMO but also an orthogonal frequency-division multiple access (OFDMA) technique may be applied, and thus, multiple access may be implemented by dividing available sub-carriers according to users. Accordingly, a WLAN system to which 802.11ax is applied may effectively support communication in dense areas and outdoors.

802.11be, which is referred to as extremely high throughput (EHT), may support a 6GHz unlicensed frequency band, utilize a bandwidth of up to 320 MHz per channel, introduce hybrid automatic repeat and request (HARQ), and support up to 16X16 MIMO. Thus, an advanced WLAN system may be expected to effectively support low latency and high-speed transmission like new radio (NR), which is fifth generation (5G) technology.

In the WLAN technique, there are discussions on an aggregated-physical layer protocol data unit (A-PPDU) technique of aggregating and simultaneously transmitting different PPDUs generated based on different standards.

Operations, such as channel estimation and automatic gain control (AGC), may be performed based on training fields respectively included in the different PPDUs included in the A-PPDU. Start points of the training fields respectively included in the PPDUs may be aligned and match to smoothly perform the operations based on the training fields. In this case, a length of a signal field transmitted prior to the training field in each of the PPDUs may be changed depending on a length of data transmitted via the signal field, and thus, the start points of the training fields respectively included in the PPDUs may be made different from each other. Therefore, research is being conducted on various methods of adjusting the length of the signal field.

### SUMMARY

One or more aspects of the disclosure provide an apparatus and method of generating a signal field of which a length is adjusted, in a wireless local area network (WLAN) system.

According to an aspect of the disclosure, there is provided an operating method of a first apparatus configured to communicate with a second apparatus in a wireless local area network (WLAN) system, the method including: generating a first physical layer protocol data unit (PPDU) including a first fixed signal field and a first variable signal field; generating a second PPDU including a second fixed signal field and a second variable signal field, the second fixed signal field including a dummy field indicating information about one or more dummy symbols, and the second variable signal field including one or more effective symbols and the one or more dummy symbols based on a length of the first variable signal field; and transmitting an aggregated-PPDU (A-PPDU) including the first PPDU and the second PPDU to the second apparatus.

According to another aspect of the disclosure, there is provided an operating method of a second apparatus configured to communicate with a first apparatus in a wireless local area network (WLAN) system, the method including: receiving, from the first apparatus, an aggregated-physical layer protocol data unit (A-PPDU) including a first PPDU and a second PPDU, the first PPDU including a first fixed signal field and a first variable signal field, and the second PPDU including a second fixed signal field and a second variable signal field; decoding the second fixed signal field including a dummy field indicating dummy information about one or more dummy symbols; and decoding the second variable signal field including one or more effective symbols and the one or more dummy symbols based on the dummy information.

According to another aspect of the disclosure, there is provided an operating method of a first apparatus configured to communicate with a second apparatus in a wireless local area network (WLAN) system, the method including: generating a first physical layer protocol data unit (PPDU) including a first signal field; generating a second PPDU including a second signal field based on a length of the first signal field, the second signal field including one or more effective symbols, one or more dummy symbols, and a dummy field indicating information about the one or more dummy symbols; and transmitting an aggregated-PPDU (A-PPDU) including the first PPDU and the second PPDU to the second apparatus.

According to another aspect of the disclosure, there is provided a first apparatus configured to communicate with a second apparatus in a wireless local area network (WLAN) system, the first apparatus including: a processing circuit configured to generate a first physical layer protocol data unit (PPDU) and a second PPDU, the first PPDU including a first fixed signal field and a first variable signal field, the second PPDU including a second fixed signal field and a second variable signal field; and a transceiver configured to transmit an aggregated-PPDU (A-PPDU) including the first PPDU and the second PPDU to the second apparatus, wherein the processing circuit is further configured to: generate the second variable signal field including an effective symbol and one or more dummy symbols based on a length of the first variable signal field, and generate the second fixed signal field including a dummy field indicating information about the one or more dummy symbols.

According to another aspect of the disclosure, there is provided a second apparatus configured to communicate with a first apparatus in a wireless local area network (WLAN) system, the second apparatus including: a transceiver configured to receive, from the first apparatus, an aggregated-physical layer protocol data unit (A-PPDU) including a first PPDU and a second PPDU, the first PPDU including a first fixed signal field and a first variable signal field, and the second PPDU including a second fixed signal field and a second variable signal field; a processing circuit configured to decode the second fixed signal field including a dummy field indicating dummy information about one or more dummy symbols; and decode the second variable signal field including one or more effective symbols and the one or more dummy symbols based on the dummy information.

### BRIEF DESCRIPTION OF DRAWINGS

Embodiments will be more clearly understood from the following detailed description taken in conjunction with the accompanying drawings in which:
FIG. 1 is a diagram of a wireless communication system according to an embodiment;
FIG. 2 is a block diagram of a wireless communication system according to an embodiment;
FIG. 3 is a block diagram of an apparatus according to an embodiment;
FIG. 4 is a flowchart of an operating method of a wireless communication system according to an embodiment;
FIG. 5 is a flowchart of a method of generating a second physical layer protocol data unit (PPDU) by an access point (AP) of a wireless communication system according to an embodiment;
FIG. 6 illustrates an example of an aggregated-PPDU (A-PPDU) transmitted from an access point according to an embodiment;
FIG. 7 illustrates an example of a method of generating a variable signal field including an effective symbol, based on a contents channel, in an access point according to an embodiment;
FIG. 8 illustrates an example of a method of generating a variable signal field including an effective symbol and a dummy symbol, based on a contents channel, in an access point according to an embodiment;
FIG. 9 illustrates an example of a method of generating additional padding for generating a dummy symbol in an access point according to an embodiment;
FIG. 10 illustrates a dummy field transmitted from an access point according to an embodiment;
FIG. 11 illustrates an example of a universal signal (U-SIG) field included in a PPDU transmitted from an access point according to an embodiment;
FIG. 12 illustrates a first example of a dummy field of a U-SIG field included in a PPDU transmitted from an access point according to an embodiment;
FIG. 13 illustrates a second example of a dummy field of a U-SIG field included in a PPDU transmitted from an access point according to an embodiment;
FIG. 14 illustrates a third example of a dummy field of a U-SIG field included in a PPDU transmitted from an access point according to an embodiment;
FIG. 15 illustrates a fourth example of a dummy field of a U-SIG field included in a PPDU transmitted from an access point according to an embodiment; and
FIG. 16 illustrates examples of a wireless communication apparatus according to an embodiment.

### DETAILED DESCRIPTION

Hereinafter, embodiments will be described in detail with reference to the accompanying drawings.

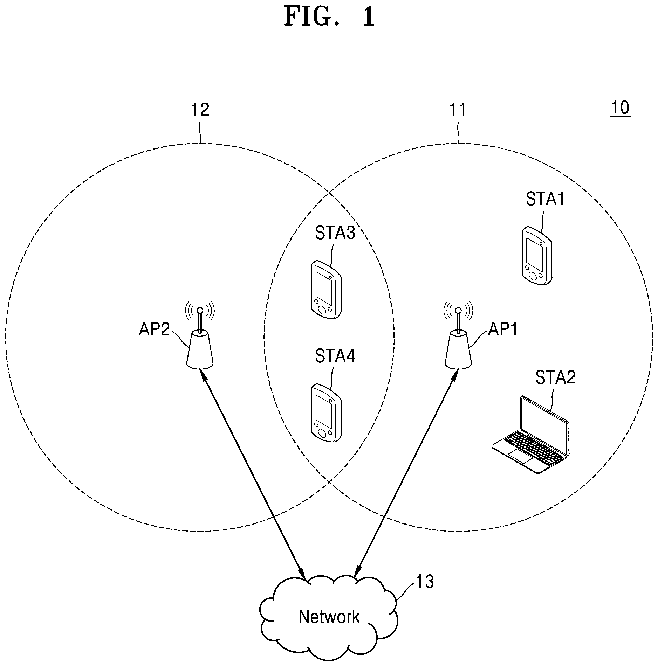

FIG. 1 is a diagram of a wireless communication system according to an embodiment.

FIG. 1 illustrates a wireless local area network (WLAN) system, which is an example of a wireless communication system 10.

Hereinafter, embodiments are described based on a wireless communication system, for example, an IEEE 802.11 standard, which is based on orthogonal frequency division multiplexing (OFDM) or orthogonal frequency division multiplexing access (OFDMA), but the disclosure is not limited thereto. As such, according to some embodiments, the disclosure may be applied to other wireless communication systems with similar technical backgrounds or channel settings (e.g., cellular communication systems, such as long-term evolution (LTE), LTE-advanced (LTE-A), new radio (NR), wireless broadband (WiBro), and global system for mobile communication (GSM), or near-field communication (NFC) systems, such as Bluetooth and NFC.

In addition, various functions described below may be implemented or supported by artificial intelligence (AI) technology or at least one computer program. Each of the at least one computer program may include computer-readable program code and be executed on a computer-readable medium. The terms "application" and "program" refer to at least one computer program, software components, instruction sets, procedures, functions, objects, classes, instances, associated data, or a portion thereof adapted for implementation in suitable computer-readable program code. The term "computer-readable program code" refers to all types of computer code, which include source code, object code, and executable code. The term "computer-readable medium" refers to all types of media that may be accessed by a computer, for example, read-only memory (ROM), random access memory (RAM), a hard disk drive (HDD), a compact disk (CD), a digital video disk (DVD), or any other type of memory. A "non-transitory" computer-readable medium may exclude wired, wireless, optical, or other communication links that transmit transient electrical or other signals. The non-transitory computer-readable medium may include a medium on which data may be permanently stored and a medium on which data may be stored and overwritten later, such as a rewritable optical disk or an erasable memory device.

In embodiments described below, a hardware approach method is described as an example. However, embodiments include a technique using both hardware and software, and thus, the embodiments do not exclude a software approach method.

In addition, terms referring to control information, terms referring to entries, terms referring to network entries, terms referring to messages, and terms referring to components of apparatuses in the following descriptions are provided as examples for brevity. Accordingly, the disclosure is not limited to the terms described below, and other terms having equivalent technical meanings may be used.

Referring to FIG. 1, the wireless communication system 10 may include a plurality of access points and a plurality of stations. For example, the wireless communication system 10 may include a first access point AP1, a second access point AP2, a first station STA1, a second station STA2, a third station STA3, and a fourth station STA4. However, the disclosure is not limited thereto, and as such, the number of access points may be different than two and/or the number of stations may be different that four. The first access point AP1 and the second access point AP2 may connect to a network 13 including the Internet, an internet protocol (IP) network, or another arbitrary network. The first access point AP1 may provide connection to the network 13 to the first station STA1, the second station STA2, the third station STA3, and the fourth station STA4 in a first coverage region 11, and the second access point AP2 may also provide connection to the network 13 to the third and fourth stations STA3 and STA4 in a second coverage region 12. In some embodiments, the first access point AP1 and the second access point AP2 may communicate with at least one of the first station STA1, the second station STA2, the third station STA3, and the fourth station STA4, based on wireless fidelity (WiFi) or another arbitrary WLAN connection technology.

An access point may be referred to as a router or a gateway, and a station may be referred to as a mobile station, a subscriber station, a terminal, a mobile terminal, a wireless terminal, user equipment, or a user. A station may be a mobile device or a stationary device. For example, the mobile device may include, but is not limited to, a mobile phone, a laptop computer, and a wearable device and the stationary device may include, but is not limited to, a desktop computer and a smart TV. As used herein, an access point (or AP) may be referred to as a first apparatus, and a station (or STA) may be referred to as a second apparatus. However, the disclosure is not limited thereto.

The first access point AP1 and the second access point AP2 may assign at least one resource unit (RU) to at least one of the first to fourth stations STA1 to STA4. The first access point AP1 and the second access point AP2 may receive data through the at least one assigned RU, and the at least one of the first to fourth stations STA1 to STA4 may receive data through the at least one assigned RU. The first access point AP1 and the second access point AP2 may assign only a single RU to at least one station in 802.11ax, while the first access point AP1 and the second access point AP2 may assign a multi-resource unit (MRU) including at least two RUs to at least one station in 802.11be (e.g., extremely high throughput (EHT)) or in advanced IEEE 802.11 standards (e.g., EHT+ or ultrahigh reliability (UHR)). For example, the first access point AP1 may assign the MRU to at least one of the first station STA1, the second station STA2, the third station STA3, and the fourth station STA4, and receive data through the assigned MRU.

The first access point AP1 and the second access point AP2 may transmit a physical layer protocol data unit (PPDU) including data to at least one of the first to fourth stations STA1 to STA4. According to an embodiment, each of the first access point AP1 and the second access point AP2 may transmit an aggregated-PPDU (A-PPDU), which is generated by aggregating a plurality of PPDUs, to the at least one of the first to fourth stations STA1 to STA4. The plurality of PPDUs included in the A-PPDU may be respectively generated based on different standards. For example, a first PPDU included in the A-PPDU may be generated based on High Efficiency (HE), and a second PPDU included in the A-PPDU may be generated based on the UHR.

One or more embodiments of the disclosure provide a method of adjusting a length of a signal field to align start points of training fields respectively included in the plurality of PPDUs included in the A-PPDU when each of the first access point AP1 and the second access point AP2 transmits the A-PPDU to the at least one of the first to fourth stations STA1 to STA4.

The first access point AP1 and the second access point AP2 may generate a first PPDU including a first fixed signal field and a first variable signal field, generate a second PPDU including a second fixed signal field and a second variable signal field, and transmit the A-PPDU including the first PPDU and the second PPDU to a second apparatus. In an embodiment, during the generation of the second PPDU, the first access point AP1 and the second access point AP2 may generate a second variable signal field including an effective symbol and a dummy symbol, based on a length of the first variable signal field, and generate a second fixed signal field including a dummy field indicating information about a dummy symbol. As a result, by aligning the start points of the training fields to match, the accuracy of operations, such as channel estimation and automatic gain control (AGC), may improve.

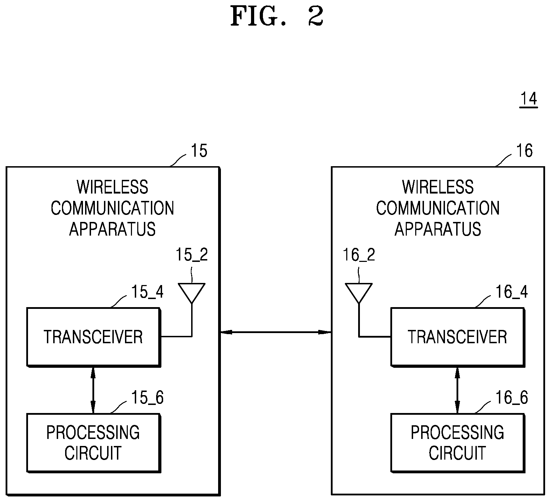

FIG. 2 is a block diagram of a wireless communication system according to an embodiment.

Referring to FIG. 2, a wireless communication system 14 may include a first wireless communication apparatus 15 and a second wireless communication apparatus 16, which communicate with each other. In FIG. 2, each of the first wireless communication apparatus 15 and the second wireless communication apparatus 16 may be an arbitrary communication apparatus in the wireless communication system 14 or may be referred to as a wireless communication apparatus. In some embodiments, each of the first wireless communication apparatus 15 and the second wireless communication apparatus 16 may be an access point or a station of a WLAN system. For example, the first wireless communication apparatus 15 and the second wireless communication apparatus 16 may include, but is not limited to, any of the access points or the station illustrated in FIG. 1.

The first wireless communication apparatus 15 may include an antenna 15_2, a transceiver 15_4, and a processing circuit 15_6. In some embodiments, the antenna 15_2, the transceiver 15_4, and the processing circuit 15_6 may be included in one package or respectively included in different packages. The second wireless communication apparatus 16 may also include an antenna 16_2, a transceiver 16_4, and a processing circuit 16_6. However, the disclosure is not limited thereto, and as such, according to some embodiments, other components may be included in the first wireless communication apparatus 15 and or the second wireless communication apparatus 16. Hereinafter, repeated descriptions of the first wireless communication apparatus 15 and the second wireless communication apparatus 16 will be omitted. For example, descriptions related to the antenna 15_2 may be similarly applicable to the antenna 16_2, descriptions related to the transceiver 15_4 may be similarly applicable to the transceiver 16_4, and descriptions related to the processing circuit 15_6 may be similarly applicable to the processing circuit 16_6.

The antenna 15_2 may receive a signal from the second wireless communication apparatus 16, provide the signal to the transceiver 15_4, and transmit a signal provided from the transceiver 15_4 to the second wireless communication apparatus 16. In some embodiments, the antenna 15_2 may include a plurality of antennas for multiple input multiple output (MIMO). In some embodiments, the antenna 15_2 may include a phased array for beamforming.

The transceiver 15_4 may process a signal received from the second wireless communication apparatus 16 via the antenna 15_2 and provide the processed signal to the processing circuit 15_6. In addition, the transceiver 15_4 may process a signal provided from the processing circuit 15_6 and output the processed signal via the antenna 15_2. In some embodiments, the transceiver 15_4 may include an analog circuit, such as a low-noise amplifier, a mixer, a filter, a power amplifier, and an oscillator. In some embodiments, the transceiver 15_4 may process the signal received from the antenna 15_2 and/or the signal received from the processing circuit 15_6 under the control by the processing circuit 15_6.

The processing circuit 15_6 may extract information transmitted by the second wireless communication apparatus 16 by processing the signal received from the transceiver 15_4. For example, the processing circuit 15_6 may extract information by demodulating and/or decoding the signal received from the transceiver 15_4. In addition, the processing circuit 15_6 may generate a signal including information to be transmitted to the second wireless communication apparatus 16 and provide the generated signal to the transceiver 15_4. For example, the processing circuit 15_6 may generate a signal by encoding and/or modulating data to be transmitted to the second wireless communication apparatus 16, and provide the generated signal to the transceiver 15_4. In some embodiments, the processing circuit 15_6 may include a programmable component, such as a central processing unit (CPU) and a digital signal processor (DSP), include a reconfigurable component, such as a field programmable gate array (FPGA), or a component that provides a fixed function, such as an intellectual property (IP) core. In some embodiments, the processing circuit 15_6 may include a memory for storing data and a series of instructions or access the memory.

As used herein, in an example case in which the transceiver 15_4 and/or the processing circuit 15_6 performs operations, it may be simply inferred that the first wireless communication apparatus 15 performs the operations. Accordingly, operations performed by an access point may be performed by a transceiver and/or a processing unit that is included in the access point, and operations performed by a station may be performed by a transceiver and/or a processing circuit that is included in the station.

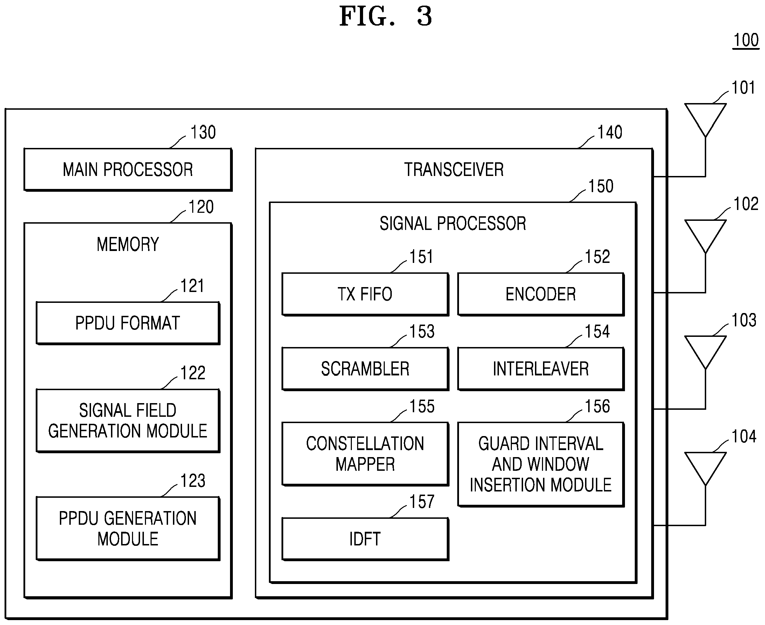

FIG. 3 is a block diagram of an apparatus according to an embodiment.

In FIG. 3, an apparatus 100 may be an access point or station including a transceiver capable of data communication. For example, the apparatus 100 of FIG. 3 may be one of the first access point AP1 and the second access point AP2 and the first to fourth stations STA1, STA2, STA3, and STA4 shown in FIG. 1. For example, the apparatus 100 may be applied to a computer, a smart phone, a portable electronic device, a tablet, a wearable device, and a sensor used for Internet of Things (IoT). Hereinafter, the embodiment shown in FIG. 3 pertains to an example in which the apparatus 100 is an access point.

Referring to FIG. 3, the apparatus 100 may include a main processor 130, a memory 120, a transceiver 140, and antenna arrays 101 to 104. The main processor 130, the memory 120, the transceiver 140, and the antenna arrays 101 to 104 may be directly and indirectly connected to each other.

The the main processor 130 may control the operations of the apparatus 100. For example, the main processor 130 may control the memory 120 and the transceiver 140. According to an embodiment, the main processor may execute one or more instructions stored in the memory 120 to perform operations of the apparatus 100. The memory 120 may include a PPDU format 121, a signal field generation module 122, and a PPDU generation module 123. For example, the signal field generation module 122 and the PPDU generation module 123 may include code or instructions executed by the main processor 130.

In an embodiment, the main processor 130 may generate the PPDU based on the signal field generation module 122 and the PPDU generation module 123.

Moreover, a signal processor 150 may include various modules configured to generate each section of PPDUs or various types of communication transmission units. For example, the various modules may include, but is not limited to, various transmission-path modules. Although FIG. 2 illustrates an embodiment in which the signal processor 150 is included in the transceiver 140, the disclosure is not limited thereto, and the signal processor 150 may be implemented as a separate component from the transceiver 140.

For example, the signal processor 150 may include a transmit first-in-first-out (TX FIFO) 151, an encoder 152, a scrambler 153, an interleaver 154, a constellation mapper 155, which may generate, for example, a quadrature amplitude modulation (QAM) symbol, an inversed discrete Fourier transformer (IDFT) 157, and a guard interval and windowing insertion module 156. For example, the guard interval and windowing insertion module 156 may insert a guard interval on a frequency to reduce interference on the spectrum and modify signals through windowing.

For reference, the transceiver 140 may include known components as shown. Also, the components may be executed in a known manner and executed using hardware, firmware, software logic, or a combination thereof.

Moreover, FIG. 3 illustrates only an example of the apparatus 100, but embodiments are not limited thereto. For example, the apparatus 100 shown in FIG. 3 may be variously changed and modified. For example, according to another embodiment, one or more components may be added, omitted or combined in the apparatus 100.

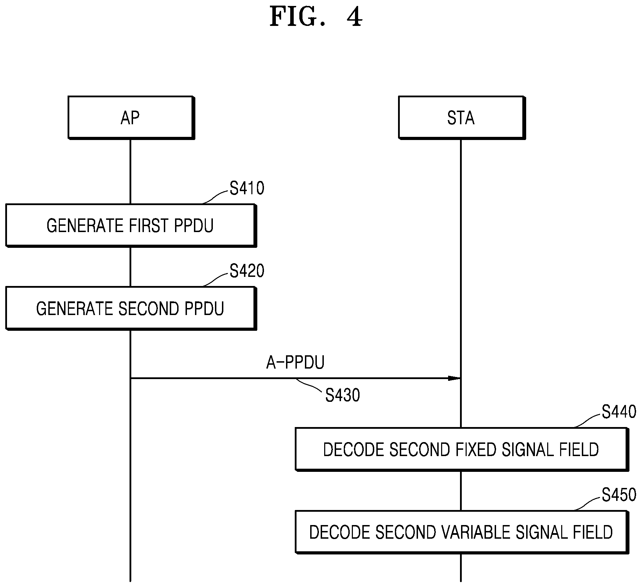

FIG. 4 is a flowchart of an operating method of a wireless communication system according to an embodiment.

Referring to FIG. 4, in operation S410, the method may include generating a first PPDU. For example, an access point AP may generate the first PPDU. The first PPDU may be generated based on any one of 802.11 standards, for example, HE that is an 802.11ax standard.

The first PPDU may include a first signal field. The first signal field may include a first fixed signal field and a first variable signal field. The first fixed signal field may be a signal field having fixed length, from among signal fields included in the first PPDU. In an example case in which the first PPDU is a PPDU generated based on HE, the first fixed signal field may be an HE-SIG-A field. The first variable signal field may be a signal field having a variable length, from among the signal fields included in the first PPDU. In an example case in which the first PPDU is a PPDU generated based on HE, the first variable signal field may be an HE-SIG-B field.

The description below will focus on an embodiment in which the first PPDU is generated based on the HE, but the disclosure is not limited thereto and may also be applied to an embodiment in which the first PPDU is generated based on another standard.

In operation S420, the method may include generating a second PPDU. For example, the access point AP may generate the second PPDU. The second PPDU may be generated based on one of the 802.11 standards, for example, UHR that is an 802.1 1bn standard.

The second PPDU may include a second signal field. The second signal field may include a second fixed signal field and a second variable signal field. The second fixed signal field may be a signal field having a fixed length, from among signal fields included in the second PPDU. In an example case in which the second PPDU is a PPDU generated based on the UHR, the second fixed signal field may be a universal signal (U-SIG) field. The second variable signal field may be a signal field having a variable length, from among the signal fields included in the second PPDU. In an example case in which the second PPDU is a PPDU generated based on the UHR, the second variable signal field may be an ultrahigh reliability-signal (UHR-SIG) field.

The description below will focus on an embodiment in which the second PPDU is generated based on the UHR, but the disclosure is not limited thereto and may also be applied to an embodiment in which the second PPDU is generated based on another standard.

According to an embodiment, a PPDU with a smaller number of effective symbols to be included in a variable signal field may be the second PPDU, while a PPDU with a greater number of effective symbols to be included in the variable signal field may be the first PPDU. In an example case in which the number of effective symbols to be included in the variable signal field in PPDUs is the same, the first PPDU and the second PPDU may be arbitrarily determined.

In an embodiment, the access point AP may generate a second signal field including an effective symbol, a dummy symbol, and a field indicating information about the dummy symbol, based on a length of the first signal field. For example, a second variable signal field including the effective symbol and the dummy symbol may be generated based on a length of the first variable signal field. In addition, the access point AP may generate a second fixed signal field including a dummy field indicating information about the dummy symbol.

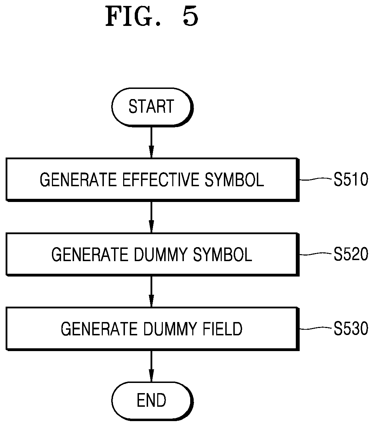

A method of generating the second PPDU by the access point AP according to an embodiment may be described in further detail with reference to FIG. 5.

FIG. 5 is a flowchart of a method of generating a second PPDU by an AP of a wireless communication system according to an embodiment.

Referring to FIG. 5, in operation S510, the method may include generating an effective symbol. For example, an access point AP may generate an effective symbol. The effective symbol may be a symbol generated based on bits corresponding to control information inserted into the second variable signal field. Also, the effective symbol may be a symbol that must be included in a second signal field. The access point AP may generate an effective symbol by modulating bits corresponding to control information inserted into the second variable signal field. For example, the access point AP may modulate the bits corresponding to control information based on a modulation method. The modulation method may include, but is not limited to, binary phase shift keying (BPSK) and quadrature binary phase shift keying (QBPSK).

In operation S520, the method may include generating one or more dummy symbols. For example, the access point AP may generate one or more dummy symbols. For example, the number of dummy symbols being generated is equal in number to a difference between a number of symbols included in a first variable signal field and a number of effective symbols. The dummy symbol may be a symbol inserted to adjust a length of the second variable signal field and may be a symbol that may be optionally included in a second signal field.

In an example case in which the number of symbols in the first variable signal field is Z and the number of effective symbols generated in operation S510 is X (here, Z>X), the access point AP may generate Y dummy symbols (here, Y=Z-X). In an example case in which the number of symbols in the first variable signal field (Z) is equal to the number of effective symbols in the second variable signal field (X), the access point AP may not generate a dummy symbol.

In an embodiment, the access point AP may generate a dummy symbol by using bits having arbitrary values. For example, the access point AP may generate bits having arbitrary values by generating random numbers. The access point AP may generate a dummy symbol by modulating the generated bits having the arbitrary values based on a modulation method. The modulation method may be a preset modulation method.

In an embodiment, the access point AP may generate a dummy symbol by using bits generated using a preset method. For example, the access point AP may generate bits using a preset method by which power required for transmission of the first variable signal field including a dummy symbol may be minimized. The access point AP may generate a dummy symbol by modulating bits generated using a preset method, based on a preset modulation method.

In an embodiment, the access point AP may generate a dummy symbol by using at least some of bits used for the generation of the effective symbol. For example, the access point AP may sequentially select the bits used for the generation of the effective symbol from upper bits, and use the selected bits for the generation of the dummy symbol. According to an embodiment, bits in equal number to the number of dummy symbols to be generated may be selected from the effective symbol. The access point AP may generate a dummy symbol by modulating at least some of bits used to generate the effective symbol, based on a modulation method. The modulation method may be a preset modulation method

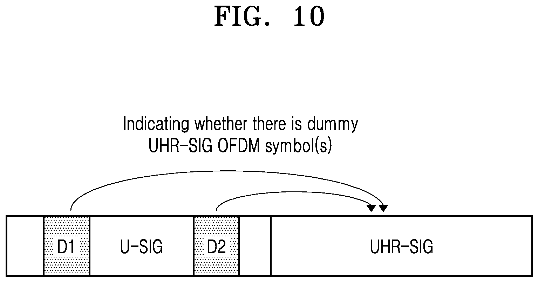

In operation S530, the method may include generating a second fixed signal field. For example, the access point AP may generate a second fixed signal field including a dummy field indicating information about the dummy symbol. The dummy field may be a field that indicates whether there is the dummy symbol and the number of dummy symbols. An example of a configuration of the dummy field is described below with reference to FIG. 10.

Referring back to FIG. 4, in operation S430, the method may include transmitting an A-PDDU. For example, the access point AP may transmit an A-PPDU including a first PPDU generated in operation S410 and a second PPDU generated in operation S420 to a station STA. Thus, the station STA may receive the A-PPDU including the first PPDU and the second PPDU from the access point AP.

In operation S440, the method may include obtaining a dummy symbol based on the A-PDDU. For example, the station STA may decode the second fixed signal field. The station STA may obtain information about the dummy symbol included in the second variable signal field, by decoding the second fixed signal field including the dummy field indicating the information about the dummy symbol.

In operation S450, the method may include obtaining control information. For example, the station STA may decode the second variable signal field including the effective symbol and the dummy symbol, based on the information about the dummy symbol, which is obtained in operation S440. The station STA may distinguish the effective symbol in the second variable signal field, based on the information about the dummy symbol. The station STA may obtain control information by decoding the effective symbol distinguished in the second variable signal field.

In an example case in which the access point AP according to example embodiments of the disclosure as described above is used, the dummy symbol may be inserted into the second variable signal field and transmitted, and thus, start points of training fields may be aligned and match in a plurality of PPDUs included in the A-PPDU. Accordingly, the accuracy of operations, such as channel estimation and AGC, may improve. In addition, by inserting the dummy field into the second fixed signal field and transmitting the inserted dummy field to the station STA, the station STA may distinguish and decode the effective symbol included in the second variable signal field.

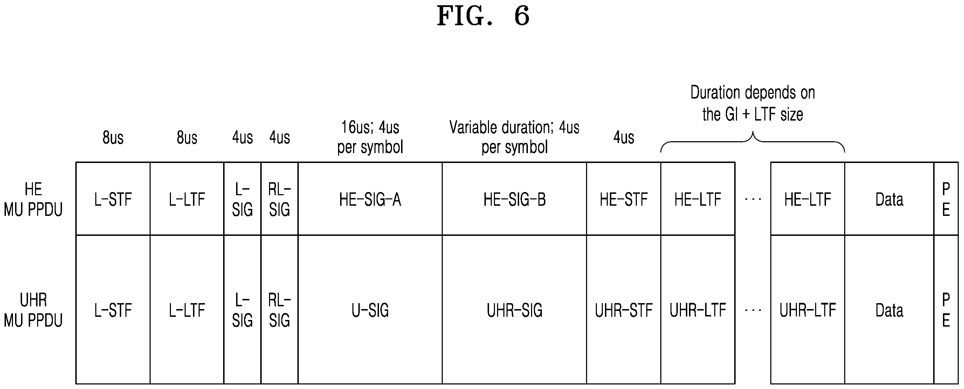

FIG. 6 illustrates an example of an A-PPDU transmitted from an access point according to an embodiment.

Referring to FIG. 6, an A-PPDU including a first PPDU according to an HE multi-user (MU) PPDU format and a second PPDU according to a UHR MU PPDU format is shown.

The first PPDU may include a legacy-short training field (L-STF), a legacy-long training field (L-LTF), a legacy-signal (L-SIG) field, a repeated legacy-signal (RL-SIG) field, a high efficiency-signal-A (HE-SIG-A) field, a high efficiency-signal-B (HE-SIG-B) field, a high efficiency-short training field (HE-STF), a high efficiency-long training field (HE-LTF), a data field, and a packet extension (PE) field. Herein, the L-STF, the L-LTF, the L-SIG field, the RL-SIG field, the HE-SIG-A field, the HE-SIG-B field, the HE-STF, and the HE-LTF may be included in a preamble, and the data field and the PE field may be included in a payload. As used herein, the HE-SIG-A field may be referred to as a first fixed signal field, and the HE-SIG-B field or an HE-SIG-B contents channel included in the HE-SIG-B field may be referred to as a first variable signal field.

The L-STF may include a short training OFDM symbol. The L-STF may be used for frame detection, AGC, diversity detection, coarse frequency/time synchronization. The L-LTF may include a long training OFDM symbol. The L-LTF may be used for fine frequency/time synchronization and channel estimation. The L-SIG field may be used to transmit control information and include information about a data rate and a data length. In some embodiments, the L-SIG field may be repeated in the RL-SIG field.

The HE-SIG-A field may include control information that is common to a plurality of stations configured to receive PPDUs. For example, a U-SIG field may include version-independent fields and version-dependent fields. The HE-SIG-B field may have a modulation and coding scheme (MCS) and a length. In an example case in which the PPDUs are transmitted to multiple users (or the plurality of stations), the HE-SIG-B field may include a common field including common control information and a user-specific field including user-dependent control information. According to an embodiment, the HE-SIG-A field may have a fixed length, while the HE-SIG-B field may have a variable length.

The HE-STF may be used for the same purpose as the L-STF, and the HE-LTF may be used for the same purpose as the L-LTF. The data field may include data to be transmitted through the PPDU. The PE field may be a field inserted subsequently to the data field to adjust a length of the PPDU.

Moreover, the first PPDU shown in FIG. 6 is only an example, and thus, the disclosure is not limited thereto and the first PPDU may be variously changed according to an HE standard protocol.

The second PPDU may include an L-STF, an L-LTF, an L-SIG field, an RL-SIG field, a U-SIG field, a UHR-SIG field, an ultrahigh reliability-short training field (UHR-STF), an ultrahigh reliability-long training field (UHR-LTF), a data field, and a PE field. Herein, the L-STF, the L-LTF, the L-SIG field, RL-SIG field, the U-SIG field, the UHR-SIG field, the UHR-STF, and the UHR-LTF may be included in a preamble, and the data field and the PE field may be included in a payload. As used herein, the U-SIG field may be referred to as a second fixed signal field, and the UHR-SIG field or a UHR-SIG contents channel included in the UHR-SIG field may be referred to as a second variable signal field.

The L-STF, the L-LTF, the L-SIG field, the RL-SIG field, the data field, and the PE field included in the second PPDU may respectively perform the same functions as the L-STF, the L-LTF, the L-SIG field, the RL-SIG field, the data field, and the PE field included in the first PPDU.

The U-SIG field, the UHR-SIG field, the UHR-STF, and the UHR-LTF included in the second PPDU may respectively perform the same functions as the HE-SIG-A field, the HE-SIG-B field, the HE-STF, and the HE-LTF included in the first PPDU. According to an embodiment, the U-SIG field may have a fixed length, while the UHR-SIG field may have a variable length.

The second PPDU shown in FIG. 6 is only an example, but the disclosure is not limited thereto and the second PPDU may be variously changed according to a UHR standard protocol.

According to an embodiment, the HE-SIG-B field included in the first PPDU and the UHR-SIG field included in the second PPDU may have variable lengths. Thus, unlike the illustration in FIG. 6 the HE-SIG-B field and the UHR-SIG field may have different lengths. In an example case in which the HE-SIG-B field and the UHR-SIG field have different lengths, the HE-STF transmitted subsequently to the HE-SIG-B field and the UHR-STF transmitted subsequently to the UHR-SIG field may begin to be transmitted at different points in time. In an example case in which a start point of the HE-STF and a start point of the UHR-STF are not aligned and do not match, convolution and calculations may not be accurately performed during operations (e.g., channel estimation and AGC), leading to reduced accuracy of the operations (e.g., channel estimation and AGC).

To solve the problem, in a method and an apparatus according to the disclosure, the length of the UHR-SIG field may be adjusted to be equal to that of the HE-SIG-B field by using the dummy symbol, and thus, the start point of the HE-STF and the start point of the UHR-STF may be aligned and match. As a result, the accuracy of operations, such as channel estimation and AGC, may improve.

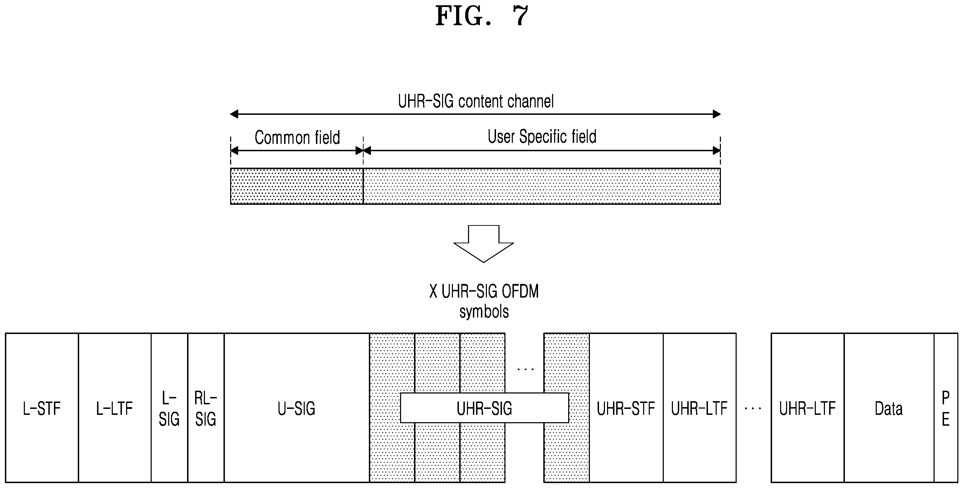

FIG. 7 illustrates an example of a method of generating a variable signal field including an effective symbol, based on a contents channel, in an access point according to an embodiment.

Referring to FIG. 7, the illustration of a UHR-SIG contents channel and a UHR-SIG field generated based on the UHR-SIG contents channel is shown.

The UHR-SIG contents channel may include a common field including common control information and a user-specific field including user-dependent control information. Bits included in the UHR-SIG contents channel may be modulated based on a modulation method and modulated into symbols included in the UHR-SIG field. The modulation method may be a preset modulation method.

According to an embodiment, because the UHR-SIG contents channel shown in FIG. 7 includes only bits corresponding to the common field and bits corresponding to the user-specific field, all the bits included in the UHR-SIG contents channel may be modulated into the effective symbol. In the embodiment shown in FIG. 7, the UHR-SIG contents channel may be modulated into X effective symbols. For example, the UHR-SIG contents channel may be modulated into X UHR-SIG OFDM symbols.

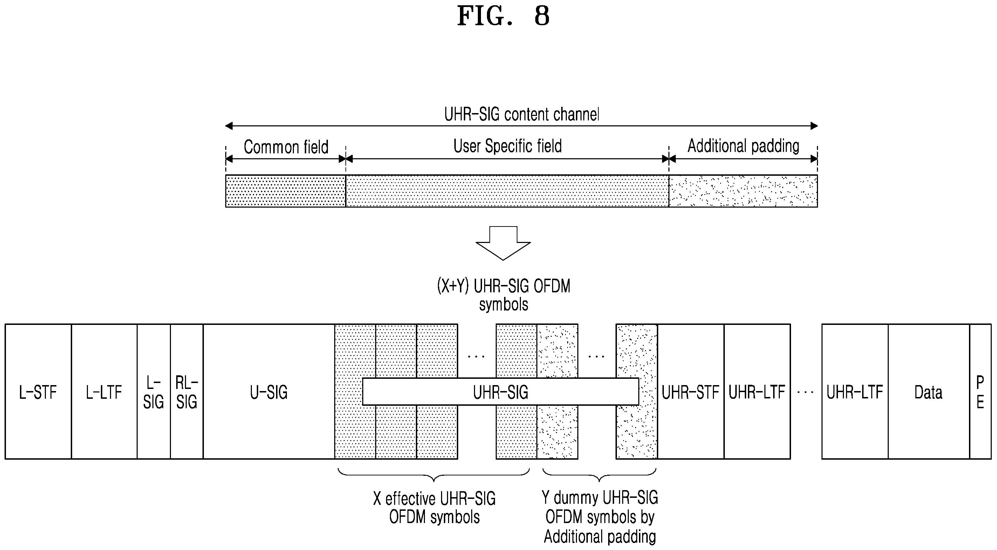

FIG. 8 illustrates an example of a method of generating a variable signal field including an effective symbol and a dummy symbol, based on a contents channel, in an access point according to an embodiment.

Referring to FIG. 8, the illustration of a UHR-SIG contents channel and a UHR-SIG field generated based on the UHR-SIG contents channel is shown.

The UHR-SIG contents channel of FIG. 8 may further include additional padding unlike the UHR-SIG contents channel of FIG. 7. The additional padding may include bits for generating the dummy symbol. In an embodiment, the additional padding may include bits having arbitrary values. In another embodiment, the additional padding may include bits generated by using a preset method. In still another embodiment, the additional padding may include at least some bits, from among bits included in a common field and a user-specific field. Bits included in the UHR-SIG contents channel may be modulated based on a modulation method and modulated into symbols included in the UHR-SIG field. The modulation method may be a preset modulation method.

According to an embodiment, bits corresponding to a common field and bits corresponding to a user-specific field in the UHR-SIG contents channel shown in FIG. 8 may be modulated into the effective symbol, and bits corresponding to the additional padding of the UHR-SIG contents channel may be modulated into the dummy symbol. In the embodiment of FIG. 8, the UHR-SIG contents channel may be modulated into X effective symbols and Y dummy symbols. For example, the UHR-SIG contents channel may be modulated into X effective UHR-SIG OFDM symbols and Y dummy UHR-SIG OFDM symbols.

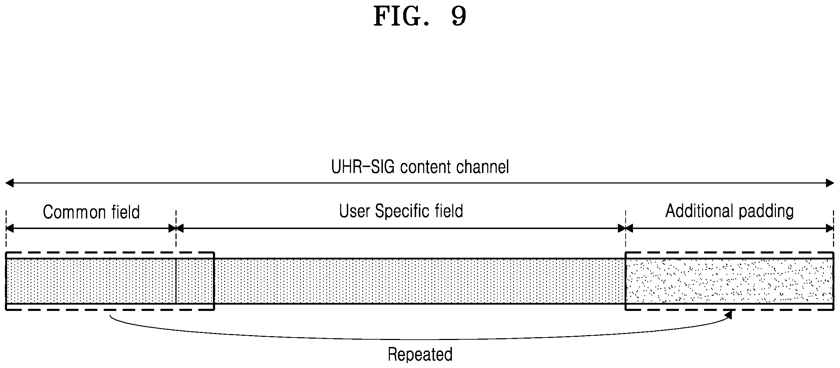

FIG. 9 illustrates an example of a method of generating additional padding for generating a dummy symbol in an access point according to an embodiment.

Referring to FIG. 9, an example of a UHR-SIG contents channel including additional padding generated by using at least some of bits included in a common field and a user-specific field is shown.

The bits included in the common field and the user-specific field may be bits used to generate an effective symbol. By selecting the bits included in the common field and the user-specific field in order from upper bits and repeating the selection of the bits from an end of the user-specific field, additional padding may be generated. According to an embodiment, the number of bits included in the generated additional padding may correspond to the number of dummy symbols generated by using the additional padding.

By generating the additional padding using the bits included in the common field and the user-specific field, the dummy symbol may be used for an operation (e.g., error correction) performed during a process of decoding an effective symbol of a station STA.

FIG. 10 illustrates a dummy field transmitted from an access point according to an embodiment.

Referring to FIG. 10, in an embodiment, the dummy field may include a first dummy field D1. In an embodiment, the dummy field may further include a second dummy field D2.

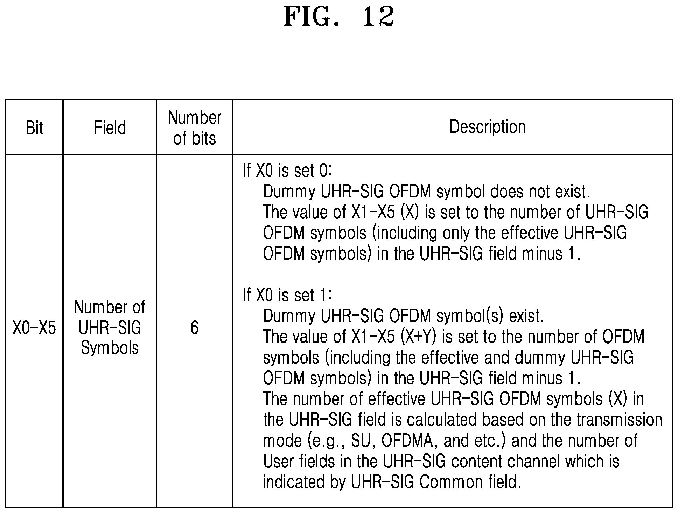

In an embodiment, the first dummy field D1 and the second dummy field D2 may indicate information about a dummy symbol. For example, each of the first dummy field D1 and the second dummy field D2 may be a field that indicates whether there is the dummy symbol and the number of dummy symbols. Specific examples in which the first dummy field D1 and the second dummy field D2 indicate information about the dummy symbol are described below with reference to FIGS. 12 to 15.

Although FIG. 10 illustrates an embodiment in which the first dummy field D1 and the second dummy field D2 are arranged apart from each other in a U-SIG field, the disclosure is not limited thereto, and the first dummy field D1 and the second dummy field D2 may be continuously arranged in the U-SIG field.

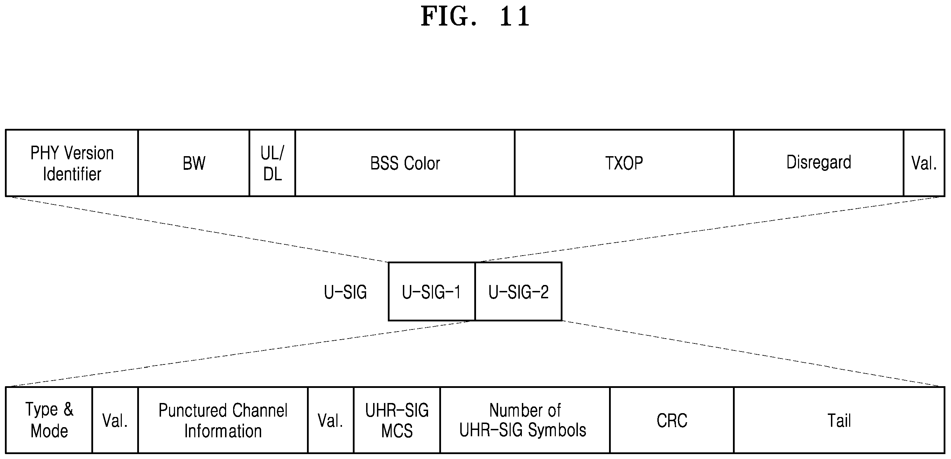

FIG. 11 illustrates an example of a U-SIG field included in a PPDU transmitted from an access point according to an embodiment.

Referring to FIG. 11, the U-SIG field may include U-SIG-1 and U-SIG-2.

The U-SIG-1 may include version-independent fields, for example, a physical (or PHY) version identifier field, a bandwidth field, an uplink/downlink (UL/DL) field, a BSS color field, a TXOP field, and a preliminary field (Disregard, Val.).

In addition, the U-SIG-2 may include version-independent fields, for example, PPDU types & compression modes (Type & Mode), a punctured channel information field, a UHR-SIG MCS field, a field of the number of UHR-SIG symbols, a cyclic redundancy check (CRC) field, a tail field, and a preliminary field (Val.).

In an embodiment, a first dummy field D1 and a second dummy field D2 may be arranged in the preliminary field (Disregard, Val.) of the U-SIG-1. According to an embodiment, an LS sub-field LS may be implemented by using at least one of bits included in a preliminary field (Disregard, Val.).

In another embodiment, the first dummy field D1 and the second dummy field D2 may be implemented by using at least one of bits of the preliminary field (Val.) of the U-SIG-2. According to an embodiment, the LS sub-field LS may be implemented by using at least one of bits included in the preliminary field (Val.).

FIG. 12 illustrates a first example of a dummy field of a U-SIG field included in a PPDU transmitted from an access point according to an embodiment.

Referring to FIG. 12, the dummy field may include a field of the number of UHR-SIG symbols as a first dummy field D1. The first dummy field D1 may be composed of a total of 6 bits including X0 to X5 bits.

The first dummy field D1 may indicate whether there is a dummy symbol and the sum of the number of effective symbols and the number of dummy symbols.

In the embodiment shown in FIG. 12, the X0 bit included in the first dummy field D1 may indicate whether there is the dummy symbol.

In an example case in which the X0 bit is 0, the X0 bit may indicate that the dummy symbol does not exist in a UHR-SIG field. According to an embodiment, the X1 to X5 bits may indicate a value that is 1 less than X, which is the number of effective symbols in the UHR-SIG field. That is, the X1 to X5 bits may represent a value of (X-1).

In an example case in which the X0 bit is 1, the X0 bit may indicate that the dummy symbol exists in the UHR-SIG field. According to an embodiment, the X1 to X5 bits may indicate a value that is 1 less than the sum of X and Y. Here, X may be the number of effective symbols in the UHR-SIG field, and Y may be the number of dummy symbols in the UHR-SIG field. That is, the X1 to X5 bits may represent a value of (X+Y-1). Here, X may be calculated based on a transmission mode (e.g., single user (SU), OFDMA, and the like) and the number of user fields in a UHR-SIG contents channel indicated by a UHR-SIG common field.

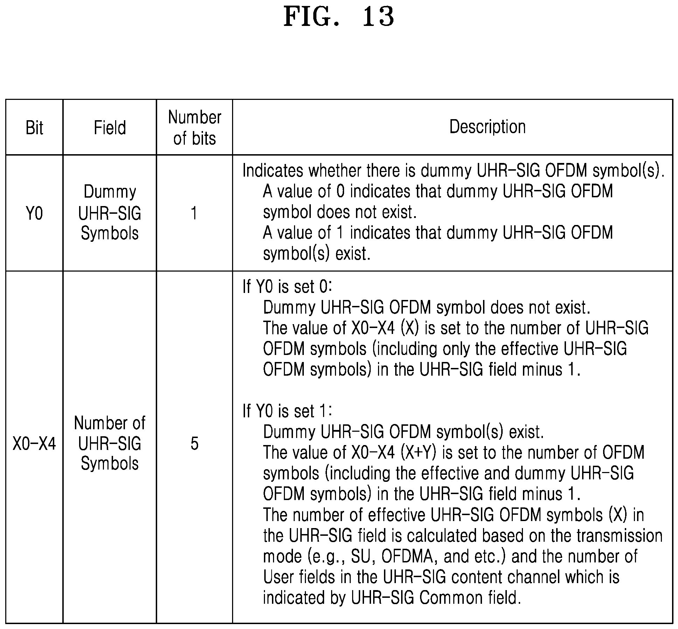

FIG. 13 illustrates a second example of a dummy field of a U-SIG field included in a PPDU transmitted from an access point according to an embodiment.

Referring to FIG. 13, the dummy field may include dummy UHR-SIG symbols as a first dummy field D1 and include a field of the number of UHR-SIG Symbols as a second dummy field D2. The first dummy field D1 may be composed of a total of 1 bit including Y0 bit. The second dummy field D2 may be composed of a total of five bits including X0 to X4 bits.

The first dummy field D1 may indicate whether there is the dummy symbol. The second dummy field D2 may indicate the sum of the number of effective symbols and the number of dummy symbols.

In the embodiment shown in FIG. 13, the Y0 bit included in the first dummy field D1 may indicate whether there is the dummy symbol.

In an example case in which the Y0 bit is 0, the Y0 bit may indicate that the dummy symbol does not exist in a UHR-SIG field. According to an embodiment, X1 to X4 bits included in the second dummy field D2 may indicate a value that is 1 less than X, which is the number of effective symbols in the UHR-SIG field. That is, the X1 to X4 bits may represent a value of (X-1).

In an example case in which the Y0 bit is 1, the Y0 bit may indicate that the dummy symbol exists in the UHR-SIG field. According to an embodiment, the X1 to X4 bits included in the second dummy field D2 may indicate a value that is 1 less than the sum of X and Y. Here, X may be the number of effective symbols in the UHR-SIG field, and Y may be the number of dummy symbols in the UHR-SIG field. That is, the X1 to X4 bits may represent a value of (X+Y-1). Herein, X may be calculated based on a transmission mode (e.g., SU, OFDMA, and the like) and the number of user fields in a UHR-SIG contents channel indicated by a UHR-SIG common field.

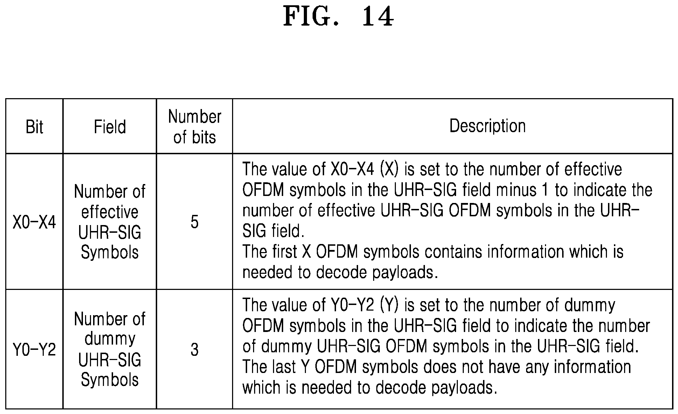

FIG. 14 illustrates a third example of a dummy field of a U-SIG field included in a PPDU transmitted from an access point according to an embodiment.

Referring to FIG. 14, the dummy field may include the number of effective UHR-SIG symbols as a first dummy field D1 and include a field of the number of dummy UHR-SIG symbols as a second dummy field D2. A first dummy field D1 may be composed of a total of five bits including X0 to X4 bits. The second dummy field D2 may be composed of a total of three bits including Y0 to Y2 bits.

The first dummy field D1 may indicate the number of effective symbols. The second dummy field D2 may indicate the number of dummy symbols.

In the embodiment shown in FIG. 14, X0 to X4 bits included in the first dummy field D1 may represent the number of effective symbols. According to an embodiment, the X0 to X4 bits included in the first dummy field D1 may indicate a value that is 1 less than X, which is the number of effective symbols in a UHR-SIG field. That is, the X0 to X4 bits may represent a value of (X-1). According to an embodiment, first X symbols included in the UHR-SIG field may include information that is needed to decode payloads.

In the embodiment shown in FIG. 14, the Y0 to Y2 bits included in the second dummy field D2 may represent the number of dummy symbols included in the UHR-SIG field. According to an embodiment, the Y0 to Y2 bits included in the second dummy field D2 may indicate Y, which is the number of dummy symbols included in the UHR-SIG field. That is, the Y0 to Y2 bits may represent a value of Y. In an example case in which Y=0, the value of Y may indicate that the dummy symbol does not exist. According to an embodiment, last Y symbols included in the UHR-SIG field may not include any information that is needed to decode the payloads.

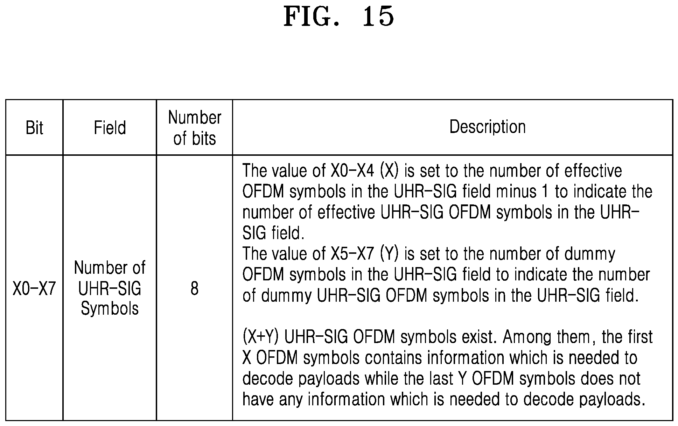

FIG. 15 illustrates a fourth example of a dummy field of a U-SIG field included in a PPDU transmitted from an access point according to an embodiment.

Referring to FIG. 15, the dummy field may include a field of the number of UHR-SIG Symbols as a first dummy field D1. The first dummy field D1 may be composed of a total of eight bits including X0 to X7 bits.

The first dummy field D1 may indicate each of the number of effective symbols and the number of dummy symbols.

In the embodiment shown in FIG. 15, the X0 to X4 bits included in the first dummy field D1 may represent the number of effective symbols. According to an embodiment, the X0 to X4 bits included in the first dummy field D1 may indicate a value that is 1 less than X, which is the number of effective symbols included in a UHR-SIG field. That is, the X0 to X4 bits may represent a value of (X-1).

In the embodiment shown in FIG. 15, X5 to X7 bits included in the first dummy field D1 may indicate the number of dummy symbols included in the UHR-SIG field. According to an embodiment, the X5 to X7 bits included in the first dummy field D1 may indicate Y, which is the number of dummy symbols included in the UHR-SIG field. That is, the X5 to X7 bits may indicate a value of Y. In an example case in which Y=0, the value of Y may indicate that the dummy symbol does not exist.

According to an embodiment, the UHR-SIG field may include (X+Y) symbols. From among the (X+Y) symbols, first X symbols may include information that is needed to decode payloads. In contrast, from among the (X+Y) symbols, last Y symbols may not include any information that is needed to decode the payloads.

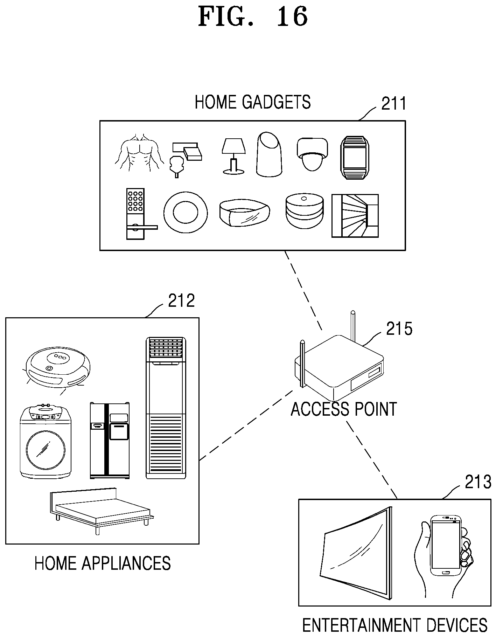

FIG. 16 illustrates examples of a wireless communication apparatus according to an embodiment. Referring to FIG. 16, an IoT network system may include an access point 215. The IoT network system may further include one or more home gadgets 211, one or more home appliances 212, or one or more entertainment devices 213.

According to an embodiment, similar to the access point AP described above with reference to FIGS. 1 to 15, a transmission apparatus included in each of the home gadget 211, the home appliances 212, and the entertainment devices 213 of FIG. 16 may generate a second variable signal field including an effective symbol and a dummy symbol, based on a length of a first variable signal field, and generate a second fixed signal field including a dummy field indicating information about the dummy symbol, and thus, a second PPDU may be generated. Next, an A-PPDU including the second PPDU may be transmitted to a station STA. As a result, the access point AP may improve the accuracy of operations (e.g., channel estimation and AGC) performed in the station STA.

## Claims

1. An operating method of a first apparatus (15) configured to communicate with a second apparatus (16) in a wireless local area network, WLAN, system (14), the method comprising:
generating (S410) a first physical layer protocol data unit, PPDU, comprising a first fixed signal field and a first variable signal field;
generating (S420) a second PPDU comprising a second fixed signal field and a second variable signal field, the second fixed signal field comprising a dummy field indicating information about one or more dummy symbols, and the second variable signal field comprising one or more effective symbols and the one or more dummy symbols based on a length of the first variable signal field; and
transmitting (S430) an aggregated-PPDU, A-PPDU, comprising the first PPDU and the second PPDU to the second apparatus (16).

2. The method of claim 1, wherein a number of the one or more dummy symbols is equal to a difference between a number of symbols in the first variable signal field and a number of the one or more effective symbols.

3. The method of claim 1 or 2, further comprises generating the one or more dummy symbols using bits having arbitrary values.

4. The method of any one of claims 1 to 3, further comprises generating the one or more dummy symbols using bits generated by a preset method.

5. The method of any one of claims 1 to 4, further comprises generating the one or more dummy symbols using at least some of bits used to generate the one or more effective symbols.

6. The method of any one of claims 1 to 5, further comprises generating a first dummy field indicating whether there is the one or more dummy symbols and a sum of a number of the one or more effective symbols and a number of the one or more dummy symbols.

7. The method any one of claims 1 to 5, further comprises:
generating a first dummy field indicating whether there is the one or more dummy symbols; and
generating a second dummy field indicating a sum of a number of the one or more effective symbols and a number of one or more dummy symbols.

8. The method of any one of claims 1 to 5, further comprises:
generating a first dummy field indicating a number of the one or more effective symbols; and
generating a second dummy field indicating a number of the one or more dummy symbols.

9. The method of any one of claims 1 to 5, further comprises generating a first dummy field indicating each of a number of the one or more effective symbols and a number of the one or more dummy symbols.

10. An operating method of a second apparatus (16) configured to communicate with a first apparatus (15) in a wireless local area network, WLAN, system (14), the method comprising:
receiving (S430), from the first apparatus (15), an aggregated-physical layer protocol data unit, A-PPDU, comprising a first PPDU and a second PPDU, the first PPDU comprising a first fixed signal field and a first variable signal field, and the second PPDU comprising a second fixed signal field and a second variable signal field;
decoding (S440) the second fixed signal field comprising a dummy field indicating dummy information about one or more dummy symbols; and
decoding (S450) the second variable signal field comprising one or more effective symbols and the one or more dummy symbols based on the dummy information.

11. The method of claim 10, wherein the dummy field comprises a first dummy field indicating whether there is the one or more dummy symbols and a sum of a number of the one or more effective symbols and a number of the one or more dummy symbols.

12. The method of claim 10, wherein the dummy field comprises:
a first dummy field indicating whether there is the one or more dummy symbols; and
a second dummy field indicating a sum of a number of the one or more effective symbols and a number of the one or more dummy symbols.

13. The method of claim 10, wherein the dummy field comprises:
a first dummy field indicating a number of the one or more effective symbols; and
a second dummy field indicating a number of the one or more dummy symbols.

14. The method of claim 10, wherein the dummy field comprises a first dummy field indicating each of a number of the one or more effective symbols and a number of the one or more dummy symbols.

15. An apparatus (15, 16, 100) configured to perform the method of any one of the previous claims.
